# EUROPÄISCHE PATENTANMELDUNG

(11) **EP 3 168 175 A1**
(43) Veröffentlichungstag der Anmeldung: **17.05.2017**
(21) Anmeldenummer: 15194651.4
(22) Anmeldetag: 16.11.2015
(51) Int. Cl.: B65G 43/08, B65G 47/31, B65G 47/71

(54) **LINIENVERTEILER FÜR SCHALENVERSCHLIESSMASCHINE**

(71) Anmelder: MULTIVAC Sepp Haggenmüller SE & Co. KG, 87787 Wolfertschwenden (DE)
(72) Erfinder: GABLER, Albert, 87760 Lachen-Albishofen (DE); CAPRIOTTI, Luciano, 87730 Bad Grönenbach (DE); JUNG, Patrick, 87435 Kempten (DE)
(74) Vertreter: Grünecker Patent- und Rechtsanwälte PartG mbB

(57) **Zusammenfassung**

Die Erfindung bezieht sich auf ein Verfahren zum Betrieb eines Linienverteilers (1) zum Aufteilen eines einspurigen Stroms von Schalen (3) auf zwei Spuren (S1, S2), umfassend wenigstens eine Transporteinheit (4), einen Verteilersensor (10) und zwei Spursensoren (7a, 7b), eine Verteilereinheit (12) und wenigstens zwei Freigabestopper (6), wobei die Freigabestopper (6) dazu ausgebildet sind, zwei nebeneinander angeordnete Schalen (3) gleichzeitig zum Weitertransport an eine nachfolgende Produktionseinheit (9) freizugeben, **dadurch gekennzeichnet,** dass bei einem Neu- oder Wiederstart des Linienverteilers (1) eine Verteilung der Schalen (3) in folgenden Schritten erfolgt:
(i) Verteilung einer ersten Schale (3) auf eine erste Spur (S1),
(ii) Verteilung zweier nachfolgender Schalen (3) auf eine zweite Spur (S2),
(iii) Verteilung weiterer zweier nachfolgender Schalen (3) auf die erste Spur (S1) und
(iv) auf (iii) folgende Verteilung gemäß den Schritten (ii) und (iii) alternierend wiederholend.

## Beschreibung

Die Erfindung bezieht sich auf ein Verfahren zum Betrieb eines Linienverteilers gemäß dem Anspruch 1, sowie auf eine Verpackungsanlage mit einem solchen Linienverteiler.

Aus der DE 10 2006 042 504 A1 und der US 2005/0247542 A1 sind Linienverteiler bekannt, um Schalen, die einspurig an eine Schalenverschließmaschine herangeführt werden, auf zwei Spuren zu verteilen, um diese Schalen einer zweispurigen Schalenverschließmaschine zuführen zu können. Die Linienverteiler weisen mehrere aufeinander folgende und zum Teil parallel zueinander angeordnete Transportbänder auf, die separat vorzugsweise bezüglich ihrer Geschwindigkeit angesteuert werden können. Aufgabe solcher Linienverteiler zusammen und für eine nachfolgend angeordnete Schalenverschließmaschine ist sowohl das Bilden einer Gruppe von Schalen, die mittels eines Greifers der Schalenverschließmaschine einem Siegelwerkzeug zugeführt wird, als auch eine Parallelisierung von zwei parallel laufenden Gruppen von Schalen, so dass die Vorderkanten der Schalen zweier nebeneinander befindlichen Schalen die gleiche Lage bezüglich ihrer Transportrichtung aufweisen.

Aus der DE 10 2011 117 242 A1 ist ein weiterer Linienverteiler bekannt, der jeweils abwechselnd eine Gruppe von Schalen, die mittels einer Greifereinrichtung in ein Siegelwerkzeug zu befördern sind, auf zwei Spuren zuordnet bzw. verteilt. Am Ende eines Transportbandes mit den zwei Spuren ist jeweils ein Vorstopper und ein Freigabestopper vorgesehen. Auf die Vorstopper wirken während des Betriebs zu unterschiedlichen Zeitpunkten unterschiedliche Staudrücke. Die Vorstopper lassen jeweils eine Schale in Transportrichtung weiter bis an den Freigabestopper. Am jeweiligen Freigabestopper liegt nun jeweils nur eine Schale an und somit liegt ein gleicher und gleichwohl geringer Staudruck an. Dies führt zu einem exakt parallelen Transport beider nebeneinander angeordneten Schalen. Diese Ausführung mit einer gruppenweisen Verteilung und der Kombination von Vorstopper und Freigabestopper begrenzt die Leistung des Linienverteilers.

Aufgabe der Erfindung ist es, einen Linienverteiler mit einer erhöhten Leistung zu Verfügung zu stellen.

Diese Aufgabe wird gelöst durch ein Verfahren zum Betrieb eines Linienverteilers mit den Merkmalen des Anspruchs 1. Vorteilhafte Weiterbildungen der Erfindung sind in den Unteransprüchen angegeben.

Das erfindungsgemäße Verfahren zum Betrieb eines Linienverteilers zum Aufteilen eines einspurigen Stroms von Schalen auf zwei Spuren, umfassend wenigstens in einer Transportrichtung aufeinanderfolgende drei Transporteinheiten mit jeweils einem Antrieb, und umfassend einen Verteilersensor und zwei Spursensoren, eine Verteilereinheit und wenigstens zwei Freigabestopper, wobei die Freigabestopper dazu ausgebildet sind, zwei nebeneinander angeordnete Schalen gleichzeitig zum Weitertransport an eine nachfolgende Produktionseinheit freizugeben, sieht bei einem Neu- oder Wiederstart des Linienverteilers eine Verteilung der Schalen in folgenden Schritten vor:
- (i) Verteilung einer ersten Schale auf eine erste Spur,
- (ii) Verteilung zweier nachfolgender Schalen auf eine zweite Spur,
- (iii) Verteilung weiterer zweier nachfolgender Schalen auf die erste Spur und
- (iv) auf (iii) folgende Verteilung gemäß den Schritten (ii) und (iii) alternierend wiederholend.

Dieses erfindungsgemäße Verfahren bringt den Vorteil mit sich, dass sich einerseits die Staudrücke an den Freigabestoppern lediglich um eine Schale (d.h. um den von einer einzigen Schale ausgeübten Staudruck) unterscheidet und andererseits der Verteilprozess homogen abläuft, selbst bei Leistungen von bis zu 160 Schalen pro Minute, die beispielsweise bei Hackfleischportionierern gefordert werden. Eine bereits vom Start weg abwechselnde Verteilung von jeweils nur einer Schale auf die zwei Spuren würde hingegen dazu führen, dass die Verteilereinheit aufgrund der schnellen und häufigen Wechsel konstruktiv aufwendiger ausgeführt sein müsste und die Belastung und damit die Reibung des Schalenrandes während der Schwenkbewegung der Verteilereinheit derart ansteigt, dass die Schale nicht mehr mit der Bandgeschwindigkeit transportiert werden kann und dies in Folge die Prozesssicherheit gefährdet.

Um auch bei einem Neustart von Beginn an eine Leistung von über 100 Schalen pro Minute bringen zu können, um die einspurig ankommenden, mit Produkt gefüllten Schalen von einer auf zwei Spuren zu verteilen und jeweils die vordersten und damit an den Freigabestoppern anliegenden Schalen parallel zur Bildung einer Gruppe von Schalen zur Verarbeitung in einer Schalenverschließmaschine mit Schalengreifern freizugeben, ist die erfindungsgemäße Startsequenz besonders vorteilhaft, da dies einen homogenen Betrieb des Linienverteilers bei hoher Leistung ermöglicht und damit die Prozesssicherheit erhöht wird.

Bei dem oben genannten Schritt (i), d.h. der Verteilung einer ersten, einzelnen Schale auf eine erste Spur, muss es sich nicht notwendigerweise um den ersten Schritt nach dem Neu- oder Wiederstart des Linienverteilers handeln. Vielmehr wäre es denkbar, dass sich vor dem Schritt (i) eine Betriebsphase befindet, bei der zunächst n-mal (mit n = 1, 2, 3, 4...) nacheinander einzelne Schalen jeweils abwechselnd auf die erste und auf die zweite Spur verteilt werden, sodass in jener Anfangsphase nach jeder Schale ein "Spurwechsel" stattfindet. Die Erfindung besteht darin, dass spätestens nach einer solchen anfänglichen Betriebsphase die Schritte (i) bis (iv) durchgeführt werden.

Vorzugsweise wird mittels der Spursensoren vor dem Neu- oder Wiederstart geprüft, ob an keinem der zwei Freigabestopper eine Schale vorhanden ist, um gewährleisten zu können, dass sich auf dem Transportband des Linienverteilers keine Schalen befinden.

In einer besonders vorteilhaften Ausführung folgt der erste Schritt (i) zwei- oder dreimal aufeinander, bevor die sich wiederholenden Schritte (ii) und (iii) folgen, wenn mittels der Sensoren erfasst wird, dass sich beispielsweise vor einem oder beiden Freigabestoppern noch eine Schale befindet.

Die Erfindung beinhaltet auch eine Verpackungsanlage mit einem zuvor beschrieben Linienverteiler und einer Schalenverschließmaschine als Produktionseinheit.

Im Folgenden wird ein vorteilhaftes Ausführungsbeispiel der Erfindung anhand einer Zeichnung näher dargestellt. Im Einzelnen zeigen:
- Fig. 1:: eine schematische Draufsicht eines erfindungsgemäßen Linienverteilers bei laufendem Betrieb in einer ersten Phase,
- Fig. 2:: eine schematische Draufsicht des in Figur 1 dargestellten Linienverteilers bei laufendem Betrieb in einer zweiten Phase und
- Fig. 3:: eine schematische Draufsicht des in Figur 1 dargestellten Linienverteilers bei laufendem Betrieb in einer dritten Phase.

Gleiche Komponenten sind in den Figuren durchgängig mit gleichen Bezugszeichen versehen worden.

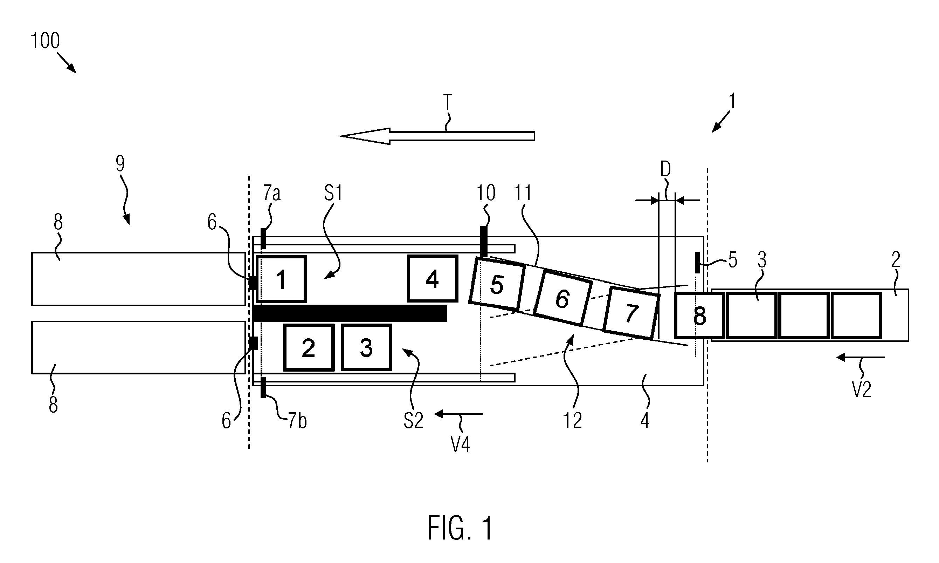

Figur 1 zeigt in schematischer Draufsicht einen erfindungsgemäßen Linienverteiler 1. Der Linienverteiler 1 erhält von einem einspurigen Zuführförderer 2, der in Produktionsrichtung T stromaufwärts des Linienverteilers 1 angeordnet ist, mit Produkt gefüllte Schalen 3. Die Schalen 3 werden auf das Transportband 4 des Linienverteilers 1 übernommen. Dabei wird jede Schale 3 von einer am vorderen Ende des Transportbands 4 angebrachten Lichtschranke 5 erfasst.

Um beim Übergang der Schalen 3 vom kontinuierlich laufenden Transportband 2 auf das kontinuierlich laufende Transportband 4 des Linienverteilers 1 einen bestimmten Abstand D zwisehen zwei aufeinanderfolgenden Schalen 3 zu erzeugen, wird das Transportband 4 des Linienverteilers 1 mit einer höheren Geschwindigkeit v4 als das mit einer Geschwindigkeit v2 laufende Transportband 2 betrieben.

In Produktionsrichtung T am Ende des Linienverteilers 1 sind für beide Spuren S1 und S2 Freigabestopper 6 angebracht, um die Schalen 3 bis zu einer Freigabe von einer Produktionseinheit 9 bei laufendem Transportband 4 anzuhalten. Die Anwesenheit einer Schale 3 (Nr. 1 oder 2) vor dem Freigabestopper 6 wird mittels Lichtschranken 7a, 7b je Spur S1, S2 erfasst. Sind auch nachfolgende Transportbänder 8 der nachfolgenden Produktionseinheit 9 zur Aufnahme von Schalen 3 bereit, so werden die Freigabestopper 6 deaktiviert bzw. entfernt und die jeweils an den Freigabestoppern 6 anliegenden Schalen 3 gleichzeitig übergeben. Nach einer definierten Zeit, die von der Geschwindigkeit v4 des Transportbands 4 abhängt, werden die Freigabestopper 6 wieder für die jeweils nachkommende Schale 3 aktiviert.

Ein Verteilersensor 10, hier als Lichtschranke ausgeführt, erkennt jeweils die Schale 3 und gibt diese Information an eine nicht näher dargestellte Steuerung weiter. Die Steuerung kann eine eigene Steuerung des Linienverteilers 1 sein oder aber auch die Maschinensteuerung einer nachfolgenden Produktionseinheit, z.B. einer Verpackungsmaschine, vorzugsweise einer Schalenverschließmaschine. Der Verteilersensor 10 stellt sicher, dass ein Schwenkvorgang von Führungsanlagen 11 einer Verteilereinheit 12 nur dann erfolgt, wenn sich keine Schale 3 im Erfassungsbereich des Verteilersensors 10 befindet. Dabei kann der Verteilersensor 10 ein Ende der Schale 3 erkennen und dieses Signal als Freigabesignal für die Schwenkbewegung der Führungsanlagen 11 an die Steuerung übermitteln.

Die Freigabestopper 6 weisen vorzugsweise einen gemeinsamen Aktor oder zwei synchron aktivierbare Aktoren auf, um gleichzeitig jeweils eine Schale 3 pro Spur S1, S2 an die nachfolgende Produktionseinheit 9 zu übergeben.

Mittels der Lichtschranken 7a, 7b wird die Anwesenheit jeweils der Schale 3 für eine Übergabe an das nachfolgende Transportband 8 erkannt.

Der Linienverteiler 1 und die Produktionseinheit bzw. Schalenverschließmaschine (9) sind jeweils Bestandteile einer gemeinsamen Verpackungsanlage (100), zu der außerdem der Zuführförderer (2) gehört. In Produktionsrichtung (T) ist der Linienverteiler (1) dabei stromaufwärts der Schalenverschließmaschine (9) angeordnet.

Im Folgenden wird anhand der Fig. 1 bis 3 das erfindungsgemäße Verfahren näher beschrieben. In dem gezeigten Beispiel war zu Beginn des Arbeitszyklus der Linienverteiler 1 ohne Schalen 3 bzw. es befanden sich keine Schalen 3 auf dem Transportband 4. In den Figuren sind die Schalen 3 mit Nummern versehen, die die Reihenfolge angeben, in der die Schalen 3 vom Zuführband 2 übernommen wurden und werden. Wie aus der Fig. 1 ersichtlich wurde die Schale 3 (Nr. 1) von der Verteilereinheit 12 auf die erste Spur S1 verteilt. Die folgenden zwei Schalen 3 (Nr. 2 + 3) wurden auf die zweite Spur S2 sowie anschließend die weiter folgenden Schalen 3 (Nr. 4 + 5) wieder auf die erste Spur S1 verteilt. Dies stellt eine erste zeitliche Phase dar.

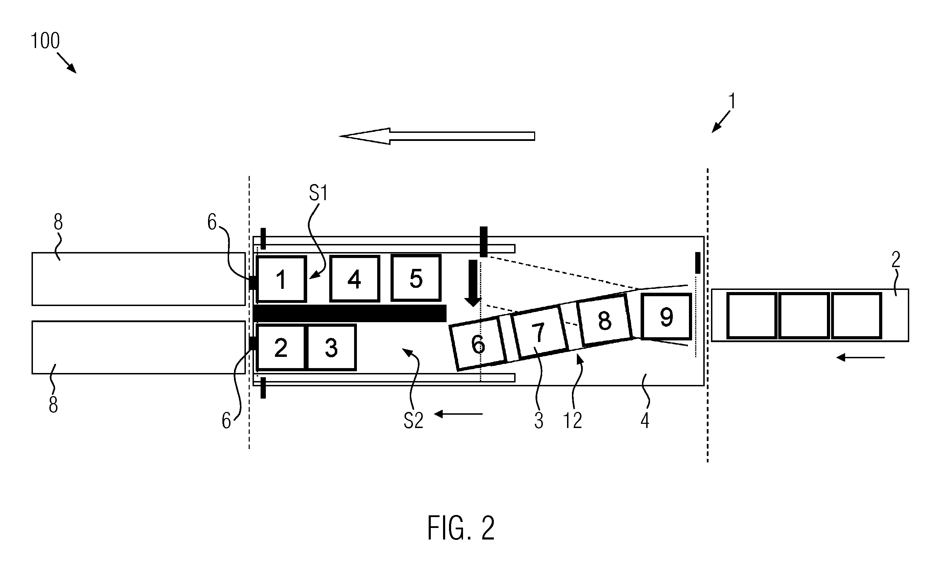

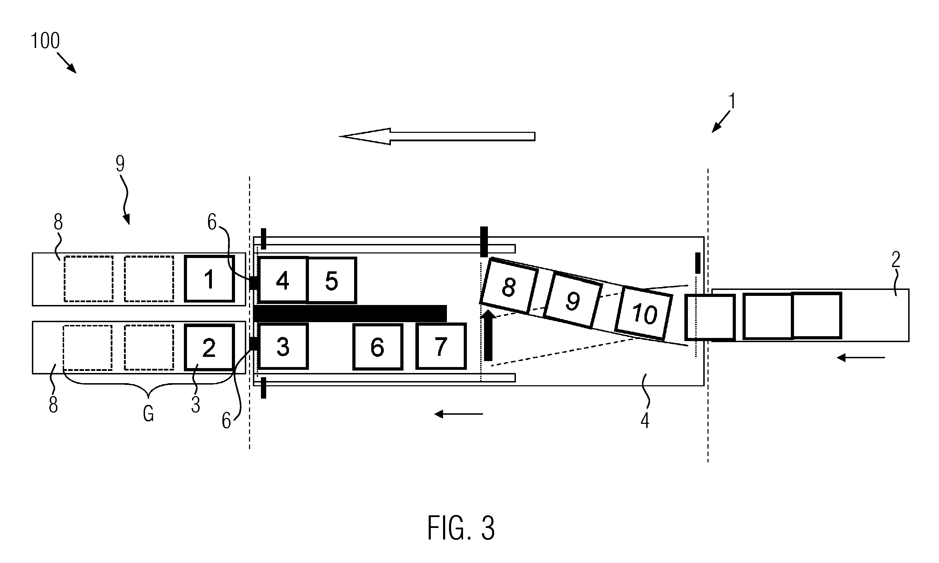

Fig. 2 zeigt eine zweite Phase, bei der die zwei Schalen 3 (Nr. 2 + 3) den Freigabestopper 6 erreicht haben und sich vor diesem stauen. Da sich jeweils eine Schale 3 an jedem Freigabestopper 6 befindet, kann dieser die jeweils vordersten Schalen 3 (Nr. 1 + 2) freigeben und an das nachfolgende Transportband 8 übergeben, wie in Fig. 3 gezeigt.

Die Fig. 3 zeigt eine dritte Phase, bei der die Schalen 3 (Nr. 1 + 2) sich auf dem Transportband 8 der Produktionseinheit 9 befinden und die Freigabestopper 6 wieder in ihrer Halteposition sind, um die nächsten Schalen 3 (Nr. 3 + 4) zu erwarten bzw. anzuhalten und anschließend freizugeben. Wie aus den Figuren 2 und 3 zu erkennen ist, befinden sich lediglich eine oder zwei Schalen 3 an den Freigabestoppern 6, so dass nur ein geringer Staudruck von den über das kontinuierlich laufende Transportband 4 vorwärts gedrängten Schalen 3 auf die Freigabestopper 6 wirkt.

Der Freigabevorgang erfolgt dreimal, um eine Gruppe G von beispielsweise sechs Schalen 3 einer Greifereinheit einer Schalenverschließmaschine 9 für eine gleichzeitige Bearbeitung in einer Siegelstation auf deren Transportbändern 8 bereitzustellen.

## Patentansprüche

1. Verfahren zum Betrieb eines Linienverteilers (1) zum Aufteilen eines einspurigen Stroms von Verpackungsschalen (3) auf zwei Spuren (S1, S2), umfassend wenigstens eine Transporteinheit (4), einen Verteilersensor (10) und zwei Spursensoren (7a, 7b), eine Verteilereinheit (12) und wenigstens zwei Freigabestopper (6), wobei die Freigabestopper (6) dazu ausgebildet sind, zwei nebeneinander angeordnete Schalen (3) gleichzeitig zum Weitertransport aus dem Linienverteiler (1) heraus freizugeben, **dadurch gekennzeichnet, dass** bei einem Neu- oder Wiederstart des Linienverteilers (1) eine Verteilung der Schalen (3) in folgenden Schritten erfolgt:
(i) Verteilung einer ersten Schale (3) auf eine erste Spur (S1),
(ii) Verteilung zweier nachfolgender Schalen (3) auf eine zweite Spur (S2),
(iii) Verteilung weiterer zweier nachfolgender Schalen (3) auf die erste Spur (S1) und
(iv) auf (iii) folgende Verteilung gemäß den Schritten (ii) und (iii) alternierend wiederholend.

2. Verfahren nach Anspruch 1, **dadurch gekennzeichnet, dass** mittels der Spursensoren (7a, 7b) vor dem Neu- oder Wiederstart geprüft wird, ob an keinem der zwei Freigabestopper (6) eine Schale (3) vorhanden ist.

3. Verpackungsanlage (100) mit einem Linienverteiler (1) und einer dem Linienverteiler (1) in einer Produktionsrichtung (T) nachgelagerten Schalenverschließmaschine (9), wobei der Linienverteiler (1) konfiguriert ist zum Aufteilen eines einspurigen Stroms von Verpackungsschalen (3) auf zwei Spuren (S1, S2) und wenigstens eine Transportereinheit (4), einen Verteilersensor (10), zwei Spursensoren (7a, 7b), eine Verteilereinheit (12) und wenigstens zwei Freigabestopper (6) aufweist, wobei die Freigabestopper (6) dazu ausgebildet sind, zwei nebeneinander angeordnete Schalen (3) gleichzeitig zum Weitertransport vom Linienverteiler (1) an die Schalenverschließmaschine (9) freizugeben, und wobei der Linienverteiler (1) konfiguriert ist zum Durchführen eines Verfahrens nach einem der vorangehenden Ansprüche.
